# EUROPÄISCHE PATENTSCHRIFT

(11) **EP 0 922 005 B1**
(45) Veröffentlichungstag und Bekanntmachung des Hinweises auf die Patenterteilung: **20.06.2001**
(21) Anmeldenummer: 97937555.7
(22) Anmeldetag: 06.08.1997
(51) Int. Cl.: B65H 67/048

(54) **VORRICHTUNG ZUM UNUNTERBROCHENEN AUFWICKELN VON FÄDEN**
UNINTERRUPTED YARN WINDING UP DEVICE
DISPOSITIF DE BOBINAGE CONTINU DE FILS

(30) Priorität: 29.08.1996 DE 19634926
(43) Veröffentlichungstag der Anmeldung: 16.06.1999
(73) Patentinhaber: NEUMAG - Neumünstersche Maschinen- und Anlagenbau GmbH, 24536 Neumünster (DE)
(72) Erfinder: KUDRUS, Heiner, D-25355 Barmstedt (DE)
(74) Vertreter: Frese-Göddeke, Beate, Dr.
(86) Internationale Anmeldenummer: EP9704283
(87) Internationale Veröffentlichungsnummer: WO9808768

(56) Entgegenhaltungen:
- EP-A- 0 254 944
- DE-A- 4 423 205
- US-A- 4 487 374
- PATENT ABSTRACTS OF JAPAN vol. 007, no. 275 (M-261), 8.Dezember 1983 & JP 58 152763 A (TORAY ENGINEERING KK), 10.September 1983,

## Beschreibung

Die Erfindung betrifft eine Vorrichtung gemäß dem Oberbegriff des Patentanspruchs 1.

Sie geht aus von einer Vorrichtung, die in EP 0 254 944 B1 beschrieben worden ist. Bei dieser bekannten Vorrichtung ist für den Antrieb der Tastwalze ebenso wie für die Antriebe der beiden Spulenhalter ein eigener Umrichter vorgesehen. Jeder der beiden Umrichter, die den Spulenhaltem zugeordnet sind, ist mittels eines Schalters auf den Antrieb der Tastwalze umschaltbar. Beim Anfahren der Maschine wird der Antrieb der Tastwalze zunächst durch den Umrichter gespeist, der zu dem in Bereitschaftsstellung befindlichen Spulenhalter gehört. Wenn die Rotation der Tastwalze sich stabilisiert hat, wird der Antrieb auf den eigenen Umrichter umgeschaltet. Diese Schaltung bleibt bestehen, bis die Maschine stillgesetzt wird.

Auch durch die EP 0 391 101 B1 ist eine Vorrichtung zum Aufwickeln von Fäden bekannt, bei der für den Antrieb der Tastwalze ebenso wie für die Antriebe der beiden Spulenhalter je ein eigener Umrichter vorgesehen ist.

Der Erfindung liegt die Aufgabe zugrunde, eine Vorrichtung mit den im Oberbegriff des Anspruchs 1 angegebenen Merkmalen zu verbilligen.

Diese Aufgabe wird gemäß der Erfindung durch die kennzeichnenden Merkmale des Anspruchs 1 gelöst. Durch diese Merkmale wird ein eigener Umrichter für die Tastwalze eingespart. Für die insgesamt drei Antriebe der beiden Spulenhalter und der Tastwalze sind nur zwei Umrichter vorgesehen.

Vorteilhafte Ausgestaltungen der Erfindung sind in Anspruch 2 und in Anspruch 3 angegeben.

Die Zeichnung dient zur Erläuterung der Erfindung anhand eines schematisch dargestellten Ausführungsbeispiels.

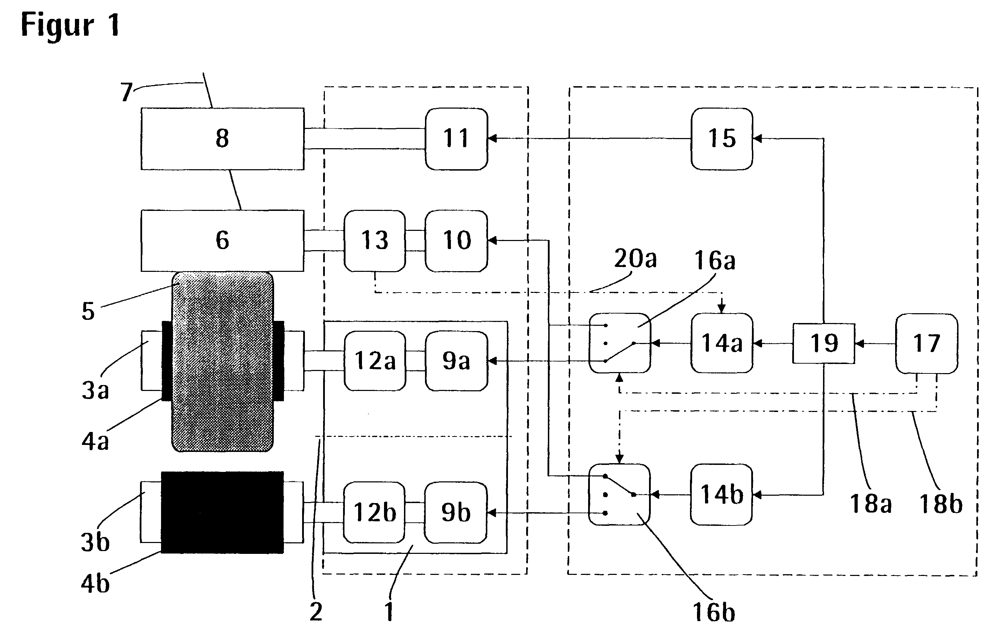

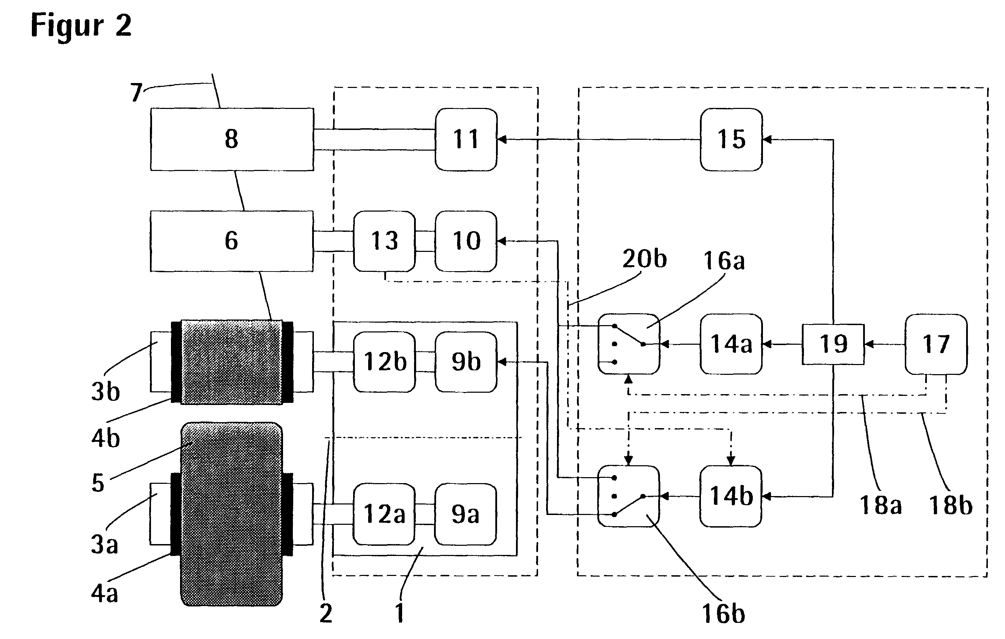

Fig. 1 und Fig. 2 veranschaulichen eine erfindungsgemäße Vorrichtung in zwei verschiedenen Betriebszuständen.

Auf einem Wendekopf 1, der um eine Achse 2 schwenkbar ist, sind zwei Spulenhalter 3a, 3b angebracht. Der Spulenhalter 3a befindet sich in dem in Fig. 1 veranschaulichten Zustand in der Wickelstellung, der Spulenhalter 3b in der Bereitschaftsstellung.

Auf dem Spulenhalter 3a sitzt eine Hülse 4a. Darauf ist eine Spule 5 gewickelt, die sich im Aufbau befindet. Auf dem Spulenhalter 3b sitzt eine leere Hülse 4b.

An der Oberfläche der Spule 5 liegt die Mantelfläche einer Tastwalze 6 an. Ein Faden 7 wird in bekannter Weise über eine Changiervorrichtung 8 der Spule 5 zugeführt, wobei er die Tastwalze 6 auf einem Teil des Umfangs umschlingt.

Die beiden Spulenhalter 3a, 3b, die Tastwalze 6 und die Changiervorrichtung 8 haben je einen frequenzsteuerbaren Antrieb 9a, 9b, 10, 11. Zur Messung der Drehzahl der beiden Spulenhalter 3a, 3b sowie der Tastwalze 6 sind Sensoren 12a, 12b, 13 vorgesehen.

Den Antrieben 9a, 9b der beiden Spulenhalter 3a, 3b ist je ein Umrichter 14a, 14b mit veränderlicher Ausgangsfrequenz zugeordnet, dem Antrieb 11 der Changiervorrichtung 8 ein Umrichter 15. Für den Antrieb 10 der Tastwalze 6 ist kein eigener Umrichter vorhanden.

In dem durch Fig. 1 veranschaulichen Betriebszustand ist der Antrieb 9a des in der Wickelstellung befindlichen Spulenhalters 3a über einen Schalter 16a, der durch ein Steuergerät 17 über eine Leitung 18a elektrisch betätigt wird, mit dem Umrichter 14a elektrisch verbunden. Der Umrichter 14a wird als "zugeordneter" Umrichter des Antriebs 9a bezeichnet, mit dem er jeweils verbunden ist, wenn der zugehörige Spulenhalter 3a sich in der Wickelstellung befindet. Entsprechendes gilt für den Umrichter 14b in Bezug auf den Antrieb 9b und den Spulenhalter 3b. Zur Übertragung der Signale des Steuergeräts 17 ist ein Bus-System 19 vorgesehen.

Der in der Bereitschaftsstellung befindliche Spulenhalter 3b ist nicht angetrieben. Der zugeordnete Umrichter 14b ist über einen Schalter 16b, der von dem Steuergerät 17 über eine Leitung 18b zu betätigen ist, mit dem Antrieb 10 der Tastwalze 6 elektrisch verbunden. Er arbeitet mit konstanter Ausgangsfrequenz, die der Solldrehzahl der Tastwalze 6 entspricht.

Ein der Ist-Drehzahl der Tastwalze 6 entsprechendes Signal wird von dem Sensor 13 über eine Leitung 20a einem in den Umrichter 14a integrierten, in der Zeichnung nicht dargestellten Regler zugeführt. Die Ist-Drehzahl der Tastwalze 6 ist proportional zur Oberflächengeschwindigkeit der Spule 5. Der Regler des Umrichters 14a vergleicht den Istwert der Oberflächengeschwindigkeit mit dem zugehörigen Sollwert, der dem Regler von dem Steuergerät 17 als Führungsgröße vorgegeben wird, und beeinflußt die Ausgangsfrequenz des Umrichters 14a und somit auch die Drehzahl des Antriebs 9a in dem Sinne, daß die Oberflächengeschwindigkeit der Spule 5 konstant gehalten wird.

Nach einer vorgegebenen Zeit oder nach Erreichen eines vorgegebenen Spulendurchmessers wird der Spulenwechsel manuell oder vorzugsweise selbsttätig eingeleitet. Der Umrichter 14b wird durch den Schalter 16b vom Antrieb 10 der Tastwalze 6 getrennt. Die Tastwalze 6 wird durch die Spule 5, an deren Oberfläche sie nach wie vor unter leichtem Druck anliegt, auf einer im wesentlichen konstanten Drehzahl gehalten.

Der Umrichter 14b wird nach Umstellung seiner Ausgangsfrequenz auf Null mit dem Antrieb 9b des noch in der Bereitschaftsstellung befindlichen Spulenhalters 3b elektrisch verbunden. Kontrolliert durch das Steuergerät 17, wird die Ausgangsfrequenz des Umrichters 14b erhöht. Dadurch wird der Spulenhalter 3b auf die Startdrehzahl gebracht, bei der die Oberflächengeschwindigkeit der darauf sitzenden leeren Hülse 4b gerade mit der Geschwindigkeit des zulaufenden Fadens 7 übereinstimmt.

Der Wendekopf 1 wird nun soweit um seine Achse 2 gedreht, daß der Faden 7 in bekannter Weise von der vollen Spule 5 auf die leere Hülse 4b übertragen wird, die auf dem Spulenhalter 3b sitzt (Fig.2). Die Leitung 20a wird unterbrochen. Nachdem die neue Spule, die sich auf der Hülse 4b aufzubauen beginnt, mit der Tastwalze 6 in Berührung gekommen ist, wird eine Leitung 20b zwischen dem Sensor 13 und einem in den Umrichter 14b integrierten Regler geschlossen. Mit dem Umrichter 14a wird der Spulenhalter 3a mit der vollen Spule 5 abgebremst. Der Umrichter 14a wird von dem Antrieb 9a getrennt und auf eine Ausgangsfrequenz eingestellt, die dem Istwert der Drehzahl der Tastwalze 6 entspricht. Das Steuergerät 17 stellt durch Betätigung des Schalters 16a den elektrischen Kontakt zwischen dem Umrichter 14a und dem Antrieb 10 der Tastwalze 6 her.

Dieser Zyklus wird ständig wiederholt, wobei der Antrieb 10 der Tastwalze 6 abwechselnd jeweils im wesentlichen für die Dauer einer Spulenreise von einem der beiden Umrichter 14a, 14b gespeist wird. Nur während einer kurzen Zeitspanne, in der der Spulenwechsel stattfindet, ist die elektrische Versorgung des Antriebs 10 unterbrochen. Diese Unterbrechung hat keinen schädlichen Einfluß auf den Spulenaufbau.

## Patentansprüche

1. Vorrichtung zum ununterbrochenen Aufwickeln von Fäden
mit folgenden Merkmalen:
Zwei Spulenhalter (3a, 3b) sind abwechselnd in eine Wickelstellung und eine Bereitschaftsstellung überführbar;
jeder Spulenhalter (3a, 3b) hat einen frequenzgesteuerten Antrieb (9a, 9b) und einen zugeordneten Umrichter (14a, 14b) mit veränderlicher Ausgangsfrequenz;
der Umrichter (14a, 14b) ist mit dem Antrieb (9a, 9b), dem er zugeordnet ist, elektrisch verbunden, während sich der zugehörige Spulenhalter (3a, 3b) in der Wickelstellung befindet;
eine Tastwalze (6), deren Mantelfläche jeweils an der Oberfläche einer im Aufbau befindlichen Spule (5) anliegt, ist ebenfalls mit einem Antrieb (10) versehen;
der Umrichter (14a, 14b) ist mittels eines Schalters von dem Antrieb (9a, 9b) des zugeordneten Spulenhalters (3a, 3b) auf dem Antrieb (10) der Tastwalze (6) umschaltbar,
gekennzeichnet durch folgendes weitere Merkmal:
der Antrieb (10) der Tastwalze (6) ist - abgesehen von einer kurzen Zeitspanne, in der der Spulenwechsel stattfindet - mit dem Umrichter (14b in Fig. 1; 14a in Fig. 2) des Spulenhalters (3b in Fig. 1; 3a in Fig. 2) elektrisch verbunden, der sich jeweils in der Bereitschaftsstellung befindet.

2. Vorrichtung nach Anspruch 1, gekennzeichnet durch eine programmierte Steuervorrichtung (17), deren Programm folgende Schaltschritte umfasst:
Umschalten des mit dem Antrieb (10) der Tastwalze (6) verbundenen Umrichters (14b) auf den Antrieb (9b) des zugeordneten Spulenhalters (3b) kurz vor dessen Überführung in die Wickelstellung;
Umschalten des anderen Umrichters (14a) auf den Antrieb (10) der Tastwalze (6) nach der Überführung des zugeordneten, in der Bereitschaftsstellung befindlichen Spulenhalters (3a) in die Bereitschaftsstellung.

3. Vorrichtung nach Anspruch 2, dadurch gekennzeichnet, daß das Programm folgende Schaltschritte umfasst:
Trennen des Umrichters (14b) vom Antrieb (10) der Tastwalze (6);
Umstellung der Ausgangsfrequenz des Umrichters (14b) auf Null;
Verbinden des Umrichters (14b) mit dem Antrieb (9b) des zugeordneten Spulenhalters (3b);
Hochfahren der Ausgangsfrequenz des Umrichters (14b) auf die Startdrehzahl der neuen Spule;
Übertragung des Fadens (7) von der vollen Spule (5) auf die leere Hülse (4b) durch Drehen des Wendekopfes (1);
Abbremsen des anderen Spulenhalters (3a) durch Absenken der Drehzahl des anderen Umrichters (14a);
Trennen des Umrichters (14a) vom Antrieb (9a) des zugeordneten Spulenhalters (3a);
Umstellen der Ausgangsfrequenz des anderen Umrichters (14a) auf die Drehzahl der Tastwalze (6);
Verbinden des anderen Umrichters (14a) mit dem Antrieb (10) des Tastwalze (6).

## Claims

1. A device for the uninterrupted winding of threads
with the following features:
two spool carriers (3a, 3b) can be transferred alternately into a winding position and a stand-by position;
each spool carrier (3a, 3b) has a frequency-controlled drive (9a, 9b) and an associated converter (14a, 14b) with a variable output frequency;
the converter (14a, 14b) is connected electrically to the drive (9a, 9b) with which it is associated, whilst the associated spool carrier (3a, 3b) is in the winding position;
a sensing roller (6), the outer face of which rests in each case against the surface of a spool (5) present in the structure, is likewise provided with a drive (10);
the converter (14a, 14b) can be switched from the drive (9a, 9b) of the associated spool carrier (3a, 3b) to the drive (10) of the sensing roller (6) by means of a switch;
**characterized by** the following further feature:
apart from a short period in which the spool change takes place, the drive (10) of the sensing roller (6) is connected electrically to the converter (14b in Fig. 1; 14a in Fig. 2) of the spool carrier (3b in Fig. 1; 3a in Fig. 2), which is in the stand-by position in each case.

2. A device according to Claim 1, **characterized by** a programmed control device (17), the program of which comprises the following switching steps:
switching the converter (14b) connected to the drive (10) of the sensing roller (6) to the drive (9b) of the associated spool carrier (3b) shortly before the transfer of the latter to the winding position;
switching the other converter (14a) to the drive (10) of the sensing roller (6) after the transfer of the associated spool carrier (3a) - present in the stand-by position - to the stand-by position.

3. A device according to Claim 2, **characterized in that** the program comprises the following switching steps:
separating the converter (14b) from the drive (10) of the sensing roller (6);
switching the output frequency of the converter (14b) to zero;
connecting the converter (14b) to the drive (9b) of the associated spool carrier (3b);
increasing the output frequency of the converter (14b) to the starting rotational speed of the new spool;
transferring the thread (7) from the full spool (5) to the empty bobbin (4b) by rotating the turning head (1);
braking the other spool carrier (3a) by reducing the rotational speed of the other converter (14a);
separating the [other] converter (14a) from the drive (9a) of the associated spool carrier (3a);
switching the output frequency of the other converter (14a) to the rotational speed of the sensing roller (6);
connecting the other converter (14a) to the drive (10) of the sensing roller (6).

## Revendications

1. Dispositif pour le bobinage ininterrompu de fils, présentant les caractéristiques suivantes :
deux porte-bobine (3a, 3b) peuvent être amenés en alternance dans une position de bobinage et dans une position d'attente ;
chaque porte-bobine (3a, 3b) présente un entraînement (9a, 9b) commandé en fréquence auquel est associé un convertisseur (14a, 14b) dont la fréquence de sortie est variable ;
lorsque le porte-bobine (3a, 3b) associé se trouve en position de bobinage, le convertisseur (14a, 14b) est relié électriquement à l'entraînement (9a, 9b) qui lui est associé;
un cylindre palpeur (6) dont la surface d'enveloppe repose chaque fois sur la surface d'une bobine (5) qui se trouve en position montée est également doté d'un entraînement (10) ;
au moyen d'un commutateur, le convertisseur (14a, 14b) peut être basculé depuis l'entraînement (9a, 9b) du porte-bobine (3a, 3b) associé jusque sur l'entraînement (10) du cylindre palpeur (6),
caractérisé par la caractéristique supplémentaire suivante :
sauf pendant un court laps de temps au cours duquel a lieu l'échange de bobines, l'entraînement (10) du cylindre palpeur (6) est relié électriquement au convertisseur (14b dans la figure 1 ; 14a dans la figure 2) du porte-bobine (3b dans la figure 1 ; 3a dans la figure 2) qui se trouve chaque fois dans la position d'attente.

2. Dispositif selon la revendication 1, caractérisé par un dispositif de commande (17) programmé dont le programme contient les étapes de commutation suivantes :
basculement du convertisseur (14b) relié à l'entraînement (10) du cylindre palpeur (6) sur l'entraînement (9b) du porte-bobine (3b) associé, peu avant le passage de ce dernier dans la position de bobinage ;
basculement de l'autre convertisseur (14a) sur l'entraînement (10) du cylindre palpeur (6) après que le porte-bobine (3a) associé, qui se trouve dans la position d'attente, est passé dans la position d'attente.

3. Dispositif selon la revendication 2, caractérisé en ce que le programme contient les étapes de commutation suivantes :
séparation du convertisseur (14b) de l'entraînement (10) du cylindre palpeur (6) ;
passage à zéro de la fréquence de sortie du convertisseur (14b) ;
raccordement du convertisseur (14b) à l'entraînement (9b) du porte-bobine (3b) associé ;
montée de la fréquence de sortie du convertisseur (14b) jusqu'à la vitesse de rotation initiale de la nouvelle bobine ;
transfert du fil (7) de la bobine pleine (5) sur la douille (4b) vide par rotation de la tête rotative (1) ;
freinage de l'autre porte-bobine (3a) par diminution de la vitesse de rotation de l'autre convertisseur (14a) ;
séparation du convertisseur (14a) de l'entraînement (9a) du porte-bobine (3a) associé ;
passage de la fréquence de sortie de l'autre convertisseur (14a) à la vitesse de rotation du cylindre palpeur (6) ;
raccordement de l'autre convertisseur (14a) à l'entraînement (10) du cylindre palpeur (6).
